# EUROPÄISCHE PATENTSCHRIFT

(11) **EP 4 281 330 B1**
(45) Veröffentlichungstag und Bekanntmachung des Hinweises auf die Patenterteilung: **18.12.2024**
(21) Anmeldenummer: 22700623.6
(22) Anmeldetag: 13.01.2022
(51) Int. Cl.: B60R 16/027

(54) **LENKSÄULENMODUL ZUM ANBRINGEN AN EINER LENKSÄULE EINES KRAFTFAHRZEUGS UND VERFAHREN ZUM ÜBERPRÜFEN EINES LENKSÄULENMODULS**
STEERING COLUMN MODULE FOR ATTACHMENT TO A STEERING COLUMN OF A MOTOR VEHICLE, AND METHOD FOR CHECKING A STEERING COLUMN MODULE
MODULE DE COLONNE DE DIRECTION DESTINÉ À ÊTRE FIXÉ À UNE COLONNE DE DIRECTION D'UN VÉHICULE À MOTEUR, ET PROCÉDÉ POUR CONTRÔLER UN MODULE DE COLONNE DE DIRECTION

(30) Priorität: 21.01.2021 DE 102021101183
(43) Veröffentlichungstag der Anmeldung: 29.11.2023
(73) Patentinhaber: Valeo Schalter und Sensoren GmbH, 74321 Bietigheim-Bissingen (DE)
(72) Erfinder: THOM, Jens, 74321 Bietigheim-Bissingen (DE); MAHLER, Reinhard, 74321 Bietigheim-Bissingen (DE)
(74) Vertreter: Ralf, Thorge
(86) Internationale Anmeldenummer: PCT/EP2022/050632
(87) Internationale Veröffentlichungsnummer: WO 2022/157068

(56) Entgegenhaltungen:
- EP-B1- 0 786 162
- DE-A1- 102006 056 503
- DE-A1- 102007 055 392
- DE-A1- 4 431 719

## Beschreibung

Die Erfindung betrifft ein Lenksäulenmodul zum Anbringen an einer Lenksäule eines Kraftfahrzeugs, welche ein erstes Gehäuseteil und ein zweites Gehäuseteil aufweist. In einer Soll-Einbaulage des Lenksäulenmoduls, in welcher das Lenksäulenmodul an der Lenksäule angebracht ist, ist das zweite Gehäuseteil aus einer Ausgangsstellung gegenüber dem ersten Gehäuseteil um wenigstens eine vollständige Umdrehung sowohl in eine erste Richtung um eine Drehachse des Lenksäulenmoduls verdrehbar als auch in eine zweite Richtung, welche der ersten Richtung entgegengesetzt ist. Das Lenksäulenmodul umfasst eine elektrische Leitung, welche mit beiden Gehäuseteilen gekoppelt und um die Drehachse spiralförmig aufgewickelt in dem Lenksäulenmodul aufgenommen ist. Des Weiteren betrifft die Erfindung ein Verfahren zum Überprüfen eines solchen Lenksäulenmoduls.

Ein Lenksäulenmodul der eingangs genannten Art ist beispielsweise in der DE 10 2013 008 688 A1 beschrieben.

Das Dokument DE 10 2007 055392 offenbart ein Lenksäulenmodul zum Anbringen an einer Lenksäule eines Kraftfahrzeugs nach dem Oberbegriff des Anspruchs 1.

Wenn ein derartiges Lenksäulenmodul etwa an einen Kraftfahrzeughersteller ausgeliefert wird, ist es sinnvoll kenntlich zu machen, dass sich die beiden Gehäuseteile in einer korrekten und mit der Soll-Einbaulage korrespondierenden Ausrichtung relativ zueinander befinden. Denn wenn die beiden Gehäuseteile korrekt zueinander ausgerichtet sind, so lässt sich das zweite Gehäuseteil relativ zu dem ersten Gehäuseteil aus der Ausgangsstellung um die Drehachse um einen im Wesentlichen gleich großen Drehwinkel in die erste Richtung verdrehen wie in die zweite Richtung. Bei dem Drehen in die erste Richtung wird die spiralförmig aufgewickelte Leitung ein Stück weit abgewickelt, und bei dem Drehen des zweiten Gehäuseteils gegenüber dem ersten Gehäuseteil um die Drehachse in die zweite Richtung wird die spiralförmig aufgewickelte Leitung weiter aufgewickelt. Ein solches Abwickeln der spiralförmig angeordneten elektrischen Leitung ist (so wie auch das Aufwickeln) naturgemäß begrenzt. Daher ist es von Bedeutung, bei einer Auslieferung des Lenksäulenmoduls dafür zu sorgen, dass sich die beiden Gehäuseteile in der korrekten Ausrichtung relativ zueinander befinden, welche mit der Ausrichtung der Gehäuseteile in der Soll-Einbaulage korrespondiert.

Um beispielsweise nach der Fertigung und einer technischen Prüfung des Lenksäulenmoduls beziehungsweise bei der Anlieferung des geprüften Lenksäulenmoduls beim Kraftfahrzeughersteller kenntlich zu machen, dass sich die beiden Gehäuseteile in der korrekten Ausrichtung relativ zueinander befinden, kann an dem Lenksäulenmodul ein Klebesiegel angebracht sein. Hierbei ist ein erster Teilbereich des Klebesiegels mit dem ersten Gehäuseteil verbunden, und ein zweiter Teilbereich des Klebesiegels ist mit dem zweiten Gehäuseteil verbunden. Durch das Klebesiegel ist dann die korrekte Ausrichtung der Gehäuseteile kenntlich gemacht.

Es kann jedoch vorkommen, dass im Anschluss an die Fertigung und technische Prüfung des Lenksäulenmoduls und im Anschluss an das Anbringen des Klebesiegels an dem Lenksäulenmodul die beiden Gehäuseteile nochmals voneinander getrennt werden beziehungsweise voneinander gelöst werden. Hierbei kommt es auch zu einer Trennung des Klebesiegels in die beiden Teilbereiche beziehungsweise zu einem entsprechenden Zerreißen des Klebesiegels. Werden daran anschließend die beiden Gehäuseteile wieder drehfest miteinander gekoppelt, etwa für einen Transport des Lenksäulenmoduls, so kann es dazu kommen, dass die beiden Teilbereiche des getrennten Klebesiegels wieder so zueinander ausgerichtet werden, wie dies vor dem Trennen des Klebesiegels in die beiden Teilbereiche oder Teile der Fall war.

Und hierbei kann der Fall auftreten, dass das zweite Gehäuseteil versehentlich gegenüber dem ersten Gehäuseteil zuvor um eine vollständige Umdrehung, also um eine Drehung von 360°, um die Drehachse verdreht wurde. Wird ein derartiges Lenksäulenmodul an der Lenksäule des Kraftfahrzeugs angebracht beziehungsweise an die Lenksäule montiert, so befinden sich die beiden Gehäuseteile nicht mehr in der korrekten Ausrichtung relativ zueinander. Die korrekte Ausrichtung der Gehäuseteile relativ zueinander lässt das Verdrehen des zweiten Gehäuseteils gegenüber dem ersten Gehäuseteil um im Wesentlichen gleich große Winkelbeträge in die beiden Richtungen zu. Wenn das zweite Gehäuseteil jedoch bereits versehentlich gegenüber dem ersten Gehäuseteil um eine vollständige Umdrehung verdreht wurde, ist dies nicht mehr der Fall. Dies ist ungünstig.

Daher ist es sinnvoll, vor einem Einbau des Lenksäulenmoduls, also vor dem Anbringen des Lenksäulenmoduls an der Lenksäule des Kraftfahrzeugs, eine Unversehrtheit des Klebesiegels zu überprüfen.

Es hat sich als vergleichsweise schwierig herausgestellt, eine Beschädigung des Klebesiegels beziehungsweise eine Unversehrtheit des Klebesiegels zuverlässig und einfach festzustellen. Dies gilt insbesondere, wenn die Feststellung der Unversehrtheit des Klebesiegels automatisiert erfolgen soll, also beispielsweise durch die Auswertung von mittels einer Kamera aufgenommenen Bildern.

Aufgabe der vorliegenden Erfindung ist es daher, ein Lenksäulenmodul der eingangs genannten Art zu schaffen, bei welchem sich eine korrekte Ausrichtung der Gehäuseteile relativ zueinander besonders einfach feststellen lässt, und ein entsprechendes Verfahren zum Überprüfen eines Lenksäulenmoduls anzugeben.

Diese Aufgabe wird durch ein Lenksäulenmodul mit den Merkmalen des Patentanspruchs 1 und durch ein Verfahren mit den Merkmalen des Patentanspruchs 10 gelöst. Vorteilhafte Ausgestaltungen mit zweckmäßigen Weiterbildungen der Erfindung sind in den abhängigen Patentansprüchen sowie in der nachfolgenden Beschreibung angegeben.

Das erfindungsgemäße Lenksäulenmodul zum Anbringen an einer Lenksäule eines Kraftfahrzeugs umfasst ein erstes Gehäuseteil und ein zweites Gehäuseteil. In einer Soll-Einbaulage des Lenksäulenmoduls, in welcher das Lenksäulenmodul an der Lenksäule des Kraftfahrzeugs angebracht ist, ist das zweite Gehäuseteil aus einer Ausgangsstellung gegenüber dem ersten Gehäuseteil um wenigstens eine vollständige Umdrehung sowohl in eine erste Richtung um eine Drehachse des Lenksäulenmoduls verdrehbar als auch in eine zweite Richtung, welche der ersten Richtung entgegengesetzt ist. Mit anderen Worten ist es in der Soll-Einbaulage des Lenksäulenmoduls möglich, das zweite Gehäuseteil aus der Ausgangsstellung um wenigstens eine vollständige Umdrehung in die erste Richtung um die Drehachse des Lenksäulenmoduls zu drehen. Und es ist in der Soll-Einbaulage des Lenksäulenmoduls auch möglich, das zweite Gehäuseteil aus der Ausgangsstellung um wenigstens eine vollständige Umdrehung in die zweite Richtung zu drehen. Eine elektrische Leitung des Lenksäulenmoduls ist mit beiden Gehäuseteilen gekoppelt und um die Drehachse spiralförmig aufgewickelt in dem Lenksäulenmodul aufgenommen. Des Weiteren weist das Lenksäulenmodul ein Klebesiegel zum Kenntlichmachen einer korrekten und mit der Soll-Einbaulage korrespondierenden Ausrichtung der beiden Gehäuseteile relativ zueinander auf. Hierbei ist ein erster Teilbereich des Klebesiegels mit dem ersten Gehäuseteil verbunden, und ein zweiter Teilbereich des Klebesiegels ist mit dem zweiten Gehäuseteil verbunden. An wenigstens einem der beiden Gehäuseteile sind Mittel ausgebildet, welche bei einer Trennung des Klebesiegels in die beiden Teilbereiche ein Überstehen eines freien Rands eines der Teilbereiche des Klebesiegels in radialer Richtung über einen freien Rand des anderen Teilbereichs des Klebesiegels bewirken.

Ein derartiges Überstehen beziehungsweise Hinausragen des freien Rands des einen der Teilbereiche über den freien Rand des anderen der Teilbereiche führt dazu, dass sich eine Trennung des Klebesiegels in die beiden Teilbereiche sehr einfach und zuverlässig optisch erfassen lässt. Liegt aber eine solche Trennung des Klebesiegels vor, so kann auf eine unerwünschte und nach dem Anbringen des Klebesiegels an den Gehäuseteilen an dem Lenksäulenmodul vorgenommene Manipulation geschlossen werden. Wenn eine solche Manipulation des Lenksäulenmoduls stattgefunden hat, kann überprüft werden, ob die beiden Gehäuseteile sich dennoch in der korrekten Ausrichtung relativ zueinander befinden, also in derjenigen Ausrichtung, welche die Verdrehung des zweiten Gehäuseteils gegenüber dem ersten Gehäuseteil um die Drehachse um jeweils im Wesentlichen gleich große Winkel zulässt, oder ob dies nicht der Fall ist.

Dass eine korrekte Ausrichtung der Gehäuseteile relativ zueinander vorliegt, lässt sich aus einer Unversehrtheit des Klebesiegels ableiten. Ist das Klebesiegel hingegen in die beiden Teilbereiche getrennt, so kann zwar dennoch eine korrekte Ausrichtung der beiden Gehäuseteile relativ zueinander vorliegen. Es ist jedoch auch möglich, dass die beiden Gehäuseteile nach dem Zerreißen des Klebesiegels nicht wieder in die korrekte Ausrichtung relativ zueinander gebracht wurden. Und Letzteres lässt sich einfach vor einem Einbau des Lenksäulenmoduls feststellen, also vor dem Anbringen des Lenksäulenmoduls an der Lenksäule des Kraftfahrzeugs. Jedoch braucht eine solche Überprüfung überhaupt nur dann vorgenommen zu werden, wenn das Klebesiegel nicht unversehrt ist beziehungsweise das Klebesiegel in die beiden Teilbereiche getrennt ist. Folglich lässt sich die korrekte Ausrichtung der Gehäuseteile relativ zueinander besonders einfach feststellen, nämlich anhand der Unversehrtheit des Klebesiegels.

Und nur in dem (in der Praxis eher selten auftretenden) Fall einer Versehrtheit oder Beschädigung des Klebesiegels ist es ratsam, eine Überprüfung der Ausrichtung der Gehäuseteile vorzunehmen. Daher ist der mit einer solchen, eher seltenen Überprüfung einher gehende Aufwand gering.

Die an wenigstens einem der beiden Gehäuseteile ausgebildeten Mittel sorgen dafür, dass sich eine gegebenenfalls vorhandene Trennung des Klebesiegels in die beiden Teilbereiche besonders einfach erkennen lässt. Denn weil die beiden Teilbereiche aufgrund des Vorsehens der Mittel an wenigstens einem der beiden Gehäuseteile im Bereich ihrer freien Ränder in radialer Richtung des Lenksäulenmoduls voneinander beabstandet sind, lässt sich eine derartige Trennung des Klebesiegels in die beiden Teilbereiche sehr einfach und zuverlässig feststellen beziehungsweise erkennen.

Ein derartiges Überstehen des freien Rands des einen der Teilbereiche in radialer Richtung über den freien Rand des anderen der Teilbereiche lässt sich insbesondere automatisiert gut und einfach feststellen, also beispielsweise durch Auswertung eines mittels einer Kamera aufgenommenen Bilds. Insbesondere auf diese Weise lässt sich also eine unerwünschte Manipulation des Lenksäulenmoduls im Hinblick auf eine Abweichung der Ausrichtung der beiden Gehäuseteile von ihrer korrekten und mit der Soll-Einbaulage korrespondierenden Ausrichtung einfach erkennen.

Dem liegt die Erkenntnis zugrunde, dass dann, wenn sich nach einer Trennung des Klebesiegels die beiden Teilbereiche in der gleichen Ebene befinden, ohne dass ein radialer Abstand der freien Ränder der Teilbereiche voneinander vorliegt, die Erkennung des gerissenen Klebesiegels beziehungsweise in die beiden Teilbereiche getrennten Klebesiegels nur vergleichsweise schwierig zu bewerkstelligen ist. Der radiale Abstand der beiden freien Ränder der Teilbereiche voneinander sorgt vorliegend jedoch dafür, dass sich das gerissene beziehungsweise in die beiden Teilbereiche getrennte Klebesiegel von einem sich hinter dem Klebesiegel befindenden Hintergrund, welcher durch wenigstens eines der Gehäuseteile bereitgestellt ist, mit einem guten Kontrast abhebt. Dies ist einer optischen Erkennung der Trennung der beiden Klebesiegel in die beiden Teilbereiche zuträglich.

Vorzugsweise sind die Mittel bereitgestellt, indem eine Außenseite eines der beiden Gehäuseteile zumindest im Bereich eines der freien Ränder des Klebesiegels in radialer Richtung über eine Außenseite des anderen der beiden Gehäuseteile übersteht. Wenn also ein radialer Höhenunterschied zwischen den Außenseiten der beiden Gehäuseteile im Bereich eines der freien Ränder des Klebesiegels vorhanden ist, beispielsweise durch das Vorsehen einer Stufe an einem der beiden Gehäuseteile, dann sorgt die Trennung des Klebesiegels in die beiden Teilbereiche dafür, dass sich zwischen den freien Rändern der Teilbereiche in radialer Richtung ein Abstand ausbildet. Dies liegt an der Eigensteifigkeit des für das Klebesiegel verwendeten Materials, bei welchem es sich beispielsweise um eine Klebefolie, also um eine zumindest bereichsweise mit einem Klebstoff beschichtete Folie, handeln kann.

Zusätzlich oder alternativ können die Mittel durch eine Rampe bereitgestellt sein, welche an einem der beiden Gehäuseteile zumindest im Bereich des Klebesiegels ausgebildet ist. Hierbei ist einer der Teilbereiche des Klebesiegels mit einer bezogen auf die Drehachse geneigt ausgerichteten Oberseite der Rampe in Anlage. Durch eine derartige Rampe kann auf besonders wirksame Art und Weise ein Sich-Aufrichten desjenigen Teilbereichs des Klebesiegels erreicht werden, welcher mit der geneigt ausgerichteten Oberseite der Rampe verbunden ist. Denn bei noch nicht getrenntem oder gerissenem Klebesiegel weist das Klebesiegel an einem freien Ende beziehungsweise an einer Kante der Rampe einen Knick auf. Dieser Knick unterstützt das Abheben des Teilbereichs des Klebesiegels in radialer Richtung und somit das Überstehen des freien Rands des mit der Oberseite der Rampe verbundenen Teilbereichs in radialer Richtung über den freien Rand des anderen Teilbereichs des Klebesiegels.

Es kann vorgesehen sein, dass ein freies Ende beziehungsweise eine Kante der Rampe in radialer Richtung nach außen über einen Rand des anderen der beiden Gehäuseteile übersteht. An der Oberseite einer derartig ausgebildeten Rampe lässt sich das Klebesiegel besonders einfach anbringen, um zu erreichen, dass die jeweiligen Teilbereiche des Klebesiegels mit den jeweiligen Gehäuseteilen verbunden sind.

Alternativ kann ein freies Ende der Rampe der Drehachse näher sein als ein Rand des anderen der beiden Gehäuseteile. Eine derartige Ausgestaltung der Rampe ist im Hinblick darauf vorteilhaft, dass so durch die Rampe kein zusätzlicher Bauraum in radialer Richtung beansprucht wird. Dies liegt daran, dass die Rampe nicht in radialer Richtung nach außen übersteht, sondern vielmehr die Oberseite der Rampe nach innen zu der Drehachse hin geneigt ausgerichtet ist und somit die Rampe zu dem freien Ende hin abfällt und nicht ansteigt. Dies ist im Hinblick auf das Einbauen des Lenksäulenmoduls, also auf das Anbringen des Lenksäulenmoduls an der Lenksäule des Kraftfahrzeugs, vorteilhaft. Denn bei einem derartigen Einbau ist der zur Verfügung stehende Bauraum üblicherweise vergleichsweise gering. Daher ist es für diesen Einbau vorteilhaft, wenn durch das Lenksäulenmodul möglichst wenig Bauraum beansprucht wird.

Vorzugsweise weist das Klebesiegel eine Sollbruchlinie auf, an welcher das Klebesiegel in die beiden Teilbereiche trennbar ist. Hierbei ist ein an die Sollbruchlinie angrenzender Abschnitt wenigstens eines der Teilbereiche frei von einem Klebstoff, mittels welchem der jeweilige Teilbereich des Klebesiegels an dem korrespondierenden Gehäuseteil gehalten ist. Ein derartiges Freihalten des wenigstens einen an die Sollbruchlinie angrenzenden Abschnitts des Klebesiegels von Klebstoff unterstützt das radiale Abheben eines der Teilbereiche infolge des Trennens oder Zerreißens des Klebesiegels an der Sollbruchlinie, also das Überstehen des freien Rands des einen der Teilbereiche in radialer Richtung über den freien Rand des anderen der Teilbereiche.

Wenn beide Teilbereiche in dem jeweils an die Sollbruchlinie angrenzenden Abschnitt frei von dem Klebstoff sind, so begünstigt dies das Überstehen des freien Rands eines der beiden Teilbereiche in radialer Richtung über den freien Rand des anderen Teilbereichs infolge der Trennung des Klebesiegels auf sehr einfache Art und Weise.

Insbesondere wenn die an wenigstens einem der beiden Gehäuseteile ausgebildeten Mittel die Rampe umfassen, so ist vorzugsweise vorgesehen, dass zumindest an dem anderen der beiden Gehäuseteile der an die Sollbruchlinie angrenzende Abschnitt des Teilbereichs frei von dem Klebstoff ist. Denn dann kann sich der mit der Oberseite der Rampe verbundene Teilbereich des Klebesiegels besonders gut von dem anderen Teilbereich lösen und so das Überstehen über den freien Rand dieses anderen Teilbereichs in radialer Richtung bewirken.

Vorzugsweise sind die beiden Gehäuseteile in einem Transportzustand des Lenksäulenmoduls, in welchem ein Abstand der Gehäuseteile voneinander in Richtung der Drehachse geringer ist als in der Soll-Einbaulage des Lenksäulenmoduls, drehfest miteinander gekoppelt. Auf diese Weise ist sichergestellt, dass es nicht aufgrund von Bewegungen der Gehäuseteile relativ zueinander zu einem Zerreißen beziehungsweise einer derartigen Beschädigung oder Trennung des Klebesiegels kommt.

Insbesondere können die beiden Gehäuseteile in dem Transportzustand des Lenksäulenmoduls drehfest miteinander verrastet sein. Eine solche Rastverbindung ermöglicht ein einfaches Koppeln der Gehäuseteile miteinander und ebenso ein einfaches Lösen der Gehäuseteile voneinander durch Entrasten von entsprechenden, an den Gehäuseteilen ausgebildeten Rastelementen.

Das Lenksäulenmodul kann eine Sensorvorrichtung zum Erfassen eines Drehens einer Lenkwelle der Lenksäule um die Drehachse umfassen. Wenn das Lenksäulenmodul eine derartige Sensorvorrichtung aufweist, so ist eine erweiterte Funktionalität des Lenksäulenmoduls gegeben.

Insbesondere kann die Sensorvorrichtung dazu ausgebildet sein, ein beim Drehen einer Lenkhandhabe wie etwa eines Lenkrads der Lenksäule auf die Lenkwelle aufgebrachtes Drehmoment zu erfassen. Diese Information kann insbesondere dazu genutzt werden, um eine motorische Unterstützung beim Betätigen der Lenkhandhabe bereitzustellen.

Zusätzlich oder alternativ kann die Sensorvorrichtung dazu ausgebildet sein, einen Lenkwinkel zu erfassen. Es kann also aufgrund des Vorsehens der Sensorvorrichtung in das Lenksäulenmodul insbesondere die Funktion eines Drehmomentsensors und/oder eines Lenkwinkelsensors integriert sein. Auch die Möglichkeit des Erfassens eines Lenkwinkels ist im Hinblick auf die Bereitstellung einer erweiterten Funktionalität des Lenksäulenmoduls vorteilhaft.

Vorzugsweise ist in dem Transportzustand zwischen einem Stirnwandbereich eines der beiden Gehäuseteile und einem in Richtung der Drehachse diesem Stirnwandbereich gegenüberliegenden Stirnwandbereich des anderen der beiden Gehäuseteile ein Spalt ausgebildet, wobei der Spalt in radialer Richtung zumindest bereichsweise von dem Klebesiegel überdeckt ist. Durch das Vorsehen eines derartigen axialen Abstands der Gehäuseteile voneinander in den einander zugewandten Stirnwandbereichen wird das Fortbewegen des freien Rands des einen der Teilbereiche des Klebesiegels von dem freien Rand des anderen Teilbereichs der Klebesiegels infolge des Zerreißens beziehungsweise der Trennung des Klebesiegels unterstützt. Denn die Ränder der beiden Teilbereiche des Klebesiegels können sich dort leichter in radialer Richtung voneinander weg bewegen, wo ein solcher axialer Spalt ausgebildet ist.

Vorzugsweise umfasst der Spalt einen ersten Spaltbereich und einen zweiten Spaltbereich. Hierbei ist der zweite Spaltbereich der Drehachse näher als der erste Spaltbereich, und der Spalt ist in dem zweiten Spaltbereich schmaler als in dem ersten Spaltbereich. Dadurch ist sichergestellt, dass der erste, in Richtung der Drehachse breitere, Spaltbereich lediglich in unmittelbarer Nähe zu dem Klebesiegel ausgebildet ist. Folglich weist das Gehäuseteil trotz des Vorsehens des vergleichsweise breiten ersten Spaltbereichs eine hohe Robustheit auf. Eine derartige Ausgestaltung des Spalts kann insbesondere bereitgestellt werden, indem nahe an der Außenseite eines der beiden Gehäuseteile eine Stufe ausgebildet oder vorgesehen ist.

Vorzugsweise weist eine einem Betrachter zugewandte Oberfläche des Klebesiegels eine Farbe und/oder eine Oberflächenstruktur und/oder eine Musterung auf, welche dem Klebesiegel eine bessere optische Unterscheidbarkeit von wenigstens einem der Gehäuseteile verleiht als ohne das Vorsehen der Farbe und/oder der Oberflächenstruktur und/oder der Musterung. Dies erhöht die Erkennbarkeit einer Beschädigung beziehungsweise der Trennung des Klebesiegels.

Beispielsweise kann die dem Betrachter zugewandte beziehungsweise äußere Oberfläche des Klebesiegels eine dunklere Farbe aufweisen als ein Material des wenigstens einen Gehäuseteils. Etwa bei Vorsehen eines an der Oberfläche schwarzen Klebesiegels vor einer beispielsweise weißen Kunststoffoberfläche des wenigstens einen Gehäuseteils ist eine besonders gute optische Unterscheidbarkeit des Klebesiegels von dem dahinterliegenden Gehäuseteil gegeben. In analoger Weise gilt dies, wenn die Oberfläche des Klebesiegels die Oberflächenstruktur oder die Musterung etwa in Form einer Schraffur oder dergleichen aufweist.

Bei dem erfindungsgemäßen Verfahren zum Überprüfen eines erfindungsgemäßen Lenksäulenmoduls auf eine Unversehrtheit des Klebesiegels wird festgestellt, ob das Klebesiegel in die beiden Teilbereiche getrennt ist. Ist dies der Fall, so kann auf eine Manipulation des Lenksäulenmoduls nach dessen Fertigung und nach dem Anbringen des Klebesiegels an dem Lenksäulenmodul geschlossen werden. Wenn das Überprüfen ergibt, dass das Klebesiegel unversehrt ist, so kann demgegenüber davon ausgegangen werden, dass eine derartige Manipulation nicht stattgefunden hat.

Folglich lässt sich durch das Überprüfen des Lenksäulenmoduls auf die Unversehrtheit des Klebesiegels sehr einfach feststellen, ob die beiden Gehäuseteile des Lenksäulenmoduls in der korrekten Ausrichtung relativ zueinander angeordnet sind.

Vorzugsweise wird zum Feststellen, ob das Klebesiegel in die beiden Teilbereiche getrennt ist, eine Kamera verwendet. So lässt sich diese Feststellung besonders aufwandsarm, kostengünstig und zuverlässig treffen.

Insbesondere kann für das Feststellen wenigstens ein von der Kamera aufgenommenes Bild mittels einer Auswerteeinrichtung ausgewertet werden. Dadurch ist die Überprüfung des Lenksäulenmoduls auf die Unversehrtheit des Klebesiegels in vorteilhafter Weise besonders weitgehend automatisiert.

Schließlich hat es sich als vorteilhaft gezeigt, wenn die Kamera derart ausgerichtet wird, dass eine optische Achse der Kamera mit der Drehachse einen spitzen Winkel einschließt. Denn durch eine derartige Ausrichtung der Kamera kann das Überstehen des freien Rands eines der Teilbereiche des Klebesiegels in radialer Richtung über den freien Rand des anderen Teilbereichs des Klebesiegels sehr gut und zuverlässig erfasst werden.

Die für das erfindungsgemäße Lenksäulenmodul beschriebenen Vorteile und bevorzugten Ausführungsformen gelten auch für das erfindungsgemäße Verfahren und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Merkmale der Erfindung ergeben sich aus den Ansprüchen, den Figuren und der Figurenbeschreibung. Dabei zeigen:
- Fig. 1: in einer schematischen Perspektivansicht ein zwei Gehäuseteile umfassendes Lenksäulenmodul in einem Anlieferungszustand beziehungsweise Transportzustand, in welchem die beiden Gehäuseteile miteinander verrastet sind, wobei an den miteinander verrasteten Gehäuseteilen ein Klebesiegel angebracht ist;
- Fig. 2: das Lenksäulenmodul gemäß Fig. 1 in einer Explosionsdarstellung;
- Fig. 3: in einer schematischen Schnittansicht und ausschnittsweise die beiden miteinander verrasteten Gehäuseteile bei unversehrtem Klebesiegel;
- Fig. 4: in einer vergrößerten Ansicht die Ausschnitte der Gehäuseteile gemäß Fig. 3, wobei das Klebesiegel getrennt ist;
- Fig. 5: in einer stark vergrößerten und schematischen Detailansicht das gerissene beziehungsweise in zwei Teilbereiche getrennte Klebesiegel im Bereich der Anbringung desselben an den beiden Gehäuseteilen gemäß Fig. 4;
- Fig. 6: schematisch das Klebesiegel in einer Draufsicht auf eine mit Klebstoff versehene Unterseite desselben;
- Fig. 7: eine schematische Perspektivansicht auf das gebrochene Klebesiegel in der Richtung einer Sichtachse einer in Fig. 3 gezeigten Kamera; und
- Fig. 8: in einer schematischen Schnittansicht und ausschnittsweise die beiden Gehäuseteile in ihrer Einbaulage, wobei das Klebesiegel in die beiden Teilbereiche getrennt ist.

In den Figuren sind gleiche oder funktionsgleiche Elemente mit identischen Bezugszeichen versehen.

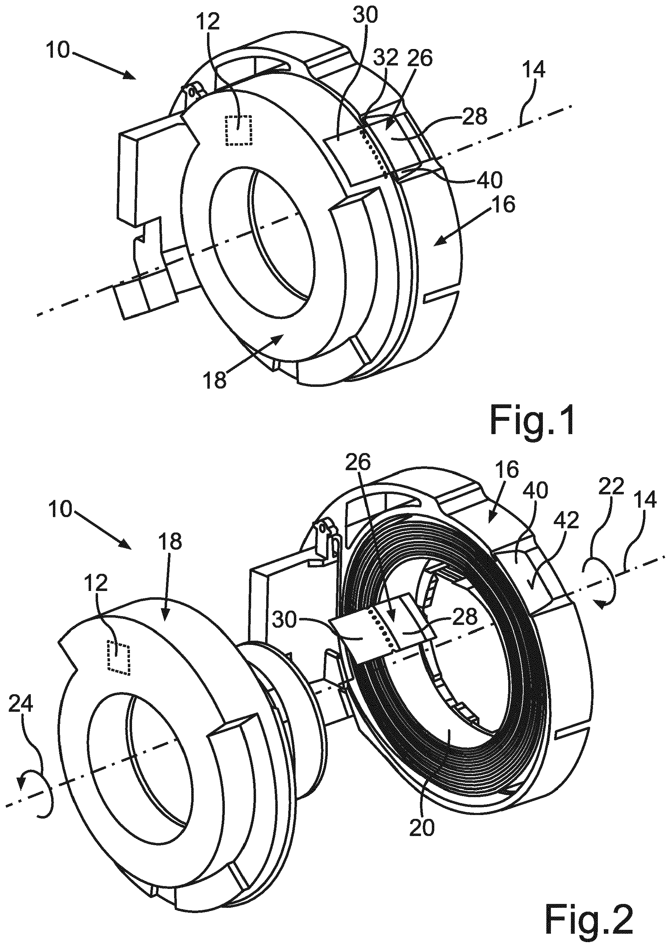

In Fig. 1 ist in einer schematischen Perspektivansicht ein Lenksäulenmodul 10 gezeigt, welches an einer (nicht gezeigten) Lenksäule eines Kraftfahrzeugs angebracht werden kann. In diesem Zusammenhang kann das Lenksäulenmodul 10 insbesondere eine vorliegend lediglich schematisiert dargestelle Sensorvorrichtung 12 umfassen, welche es ermöglicht, ein auf eine (nicht gezeigte) Lenkwelle der Lenksäule aufgebrachtes Drehmoment zu erfassen, und/oder einen Lenkwinkel, also einen Winkel, um welchen die Lenkwelle ausgehend von einer Geradeausstellung von lenkbaren Rädern des Kraftfahrzeugs um eine Drehachse 14 verdreht wird. Die Drehachse 14 des Lenksäulenmoduls 10 ist in Fig. 1 veranschaulicht, und sie entspricht im Wesentlichen einer Längserstreckungsrichtung der (nicht gezeigten) Lenkwelle der Lenksäule.

Das Lenksäulenmodul 10 umfasst ein erstes, vorliegend im Wesentlichen ringförmiges Gehäuseteil 16 und ein zweites, vorliegend ebenfalls im Wesentlichen ringförmiges Gehäuseteil 18. In Fig. 1 ist das Lenksäulenmodul 10 in einem Transportzustand beziehungsweise Anlieferungszustand gezeigt, in welchem die beiden Gehäuseteile 16, 18 drehfest miteinander gekoppelt sind. Vorliegend sind die beiden Gehäuseteile 16, 18 in dem Anlieferungszustand oder Transportzustand drehfest miteinander verrastet.

In Fig. 2 sind die beiden Gehäuseteile 16, 18 des Lenksäulenmoduls 10 in einem voneinander getrennten Zustand gezeigt. Im Einbauzustand des Lenksäulenmoduls 10, in welchem das Lenksäulenmodul 10 an der Lenksäule des Kraftfahrzeugs angebracht ist, kann das erste Gehäuseteil 16 drehfest beziehungsweise ortsfest an einem Bauteil der Lenksäule angebracht sein, beispielsweise an einem Mantel der Lenksäule. Demgegenüber ist dann das zweite Gehäuseteil 18 an der Lenkwelle festgelegt, welche innerhalb des Mantels der Lenksäule um die Drehachse 14 drehbar ist. Eine mittels einer Lenkhandhabe wie beispielsweise eines Lenkrads auf die Lenkwelle aufgebrachte Drehbewegung um die Drehachse 14 führt dann auch zu einem Verdrehen des zweiten Gehäuseteils 18 relativ zu dem ersten Gehäuseteil 16 um die Drehachse 14.

Aus der Explosionsdarstellung in Fig. 2 ist ersichtlich, dass in dem Lenksäulenmodul 10 eine elektrische Leitung um die Drehachse 14 spiralförmig aufgewickelt angeordnet ist. Vorliegend ist die elektrische Leitung als Flachbandkabel 20 ausgebildet. In der Einbaulage des Lenksäulenmoduls 10 und auch in dem Transportzustand beziehungsweise Anlieferungszustand des Lenksäulenmoduls 10 ist das Flachbandkabel 20 sowohl mit dem ersten Gehäuseteil 16 als auch mit dem zweiten Gehäuseteil 18 gekoppelt oder verbunden.

Über das Flachbandkabel 20 kann wenigstens eine elektrische Einrichtung der Lenksäule mit elektrischer Energie versorgt werden, beispielsweise ein Steuergerät und/oder eine etwa in die Lenkhandhabe integrierte Airbageinrichtung und/oder wenigstens ein in die Lenkhandhabe integriertes Bedienelement oder dergleichen.

Vorliegend ist das Flachbandkabel 20 spiralförmig aufgewickelt in einem nach außen hin beziehungsweise in radialer Richtung von dem ersten Gehäuseteil 16 begrenzten Aufnahmeraum des Lenksäulenmoduls 10 aufgenommen. Es ist bei dem Lenksäulenmodul 10 jedoch prinzipiell auch möglich, das um die Drehachse 14 spiralförmig aufgewickelte Flachbandkabel 20 beziehungsweise die Wicklungen dieses Flachbandkabels 20 innerhalb eines durch das zweite Gehäuseteil 18 bereitgestellten Aufnahmeraums unterzubringen.

Die vielen Wicklungen des spiralförmig aufgewickelten Flachbandkabels 20 lassen es zu, dass in einer Soll-Einbaulage des Lenksäulenmoduls 10, in welcher das Lenksäulenmodul 10 an der Lenksäule des Kraftfahrzeugs angebracht ist, das zweite Gehäuseteil 18 um wenigstens eine vollständige Umdrehung, also um wenigstens 360°, in eine erste Richtung 22 um die Drehachse 14 des Lenksäulenmoduls 10 verdreht werden kann, welche in Fig. 2 durch einen gekrümmten Pfeil veranschaulicht ist. Des Weiteren kann in dieser Soll-Einbaulage des Lenksäulenmoduls 10 das zweite Gehäuseteil 18 aus der Ausgangsstellung heraus gegenüber dem ersten Gehäuseteil 16 auch um wenigstens eine vollständige Umdrehung, also um wenigstens 360°, in eine zweite Richtung 24 um die Drehachse 14 des Lenksäulenmoduls 10 verdreht werden, welche in Fig. 2 ebenfalls durch einen gekrümmten Pfeil veranschaulicht ist. Die zweite Richtung 24 ist gemäß der Darstellung in Fig. 2 der ersten Richtung 22 entgegengesetzt.

Insbesondere können es die Anzahl der Wicklungen des Flachbandkabels 20 in Verbindung mit der spiralförmigen Anordnung des Flachbandkabels 20 in dem Lenksäulenmodul 10 zulassen, dass ausgehend von der Ausgangsstellung des zweiten Gehäuseteils 18 das zweite Gehäuseteil 18 in der Soll-Einbaulage des Lenksäulenmoduls 10 um einen Drehwinkel von etwa 600° bis etwa 800° in die erste Richtung 22 und ebenso um einen im Wesentlichen gleich großen Drehwinkel von etwa 600° bis etwa 800° in die zweite Richtung 24 verdreht werden kann, während das erste Gehäuseteil 16 ortsfest verbleibt.

Bei der Fertigung des Lenksäulenmoduls 10 und dem anschließenden Verbringen des Lenksäulenmoduls 10 in den Transportzustand beziehungsweise Anlieferungszustand, welcher in Fig. 1 gezeigt ist, ist man daher bestrebt sicherzustellen, dass sich die beiden Gehäuseteile 16, 18 in einer korrekten und mit der Soll-Einbaulage korrespondierenden Ausrichtung relativ zueinander befinden. Wenn die beiden Gehäuseteile 16, 18 des geprüften und für in Ordnung befundenen Lenksäulenmoduls 10 diese korrekte Ausrichtung relativ zueinander aufweisen, werden die beiden Gehäuseteile 16, 18 drehfest miteinander verbunden, vorliegend durch das Verrasten der beiden Gehäuseteile 16, 18 miteinander.

Anschließend wird ein Klebesiegel 26 an dem Lenksäulenmodul 10 angebracht (vergleiche Fig. 1). Dies erfolgt derart, dass ein erster Teilbereich 28 des Klebesiegels 26 mit dem ersten Gehäuseteil 16 verbunden wird, und ein zweiter Teilbereich 30 des Klebesiegels 26 mit dem zweiten Gehäuseteil 18 verbunden wird (vergleiche Fig. 1). Das Klebesiegel 26 oder Foliensiegel macht hierbei kenntlich, dass sich die beiden Gehäuseteile 16, 18 in der korrekten und mit der Soll-Einbaulage korrespondierenden Ausrichtung relativ zueinander befinden. Dadurch ist sichergestellt, dass sich auch das Flachbandkabel 20 in der Ausgangsstellung oder Mittelposition befindet, in welcher das zweite Gehäuseteil 18 relativ zu dem ersten Gehäuseteil 16 um jeweils einen in etwa gleich großen Drehwinkel in die erste Richtung 22 und in die zweite Richtung 24 verdreht werden kann.

Es kann nun vorkommen, dass die nach der Fertigung und Prüfung des Lenksäulenmoduls 10 miteinander verrasteten Gehäuseteile 16, 18 wieder voneinander getrennt werden, wobei die Rastung geöffnet beziehungsweise gelöst wird. Dies führt auch zu einem Reißen beziehungsweise einer Trennung des Klebesiegels 26 an einer Sollbruchlinie des Klebesiegels 26, welche vorliegend als Perforationslinie 32 ausgebildet ist. Es kann weiter vorkommen, dass nach einem solchen Aufbrechen beziehungsweise Zerreißen oder Trennen des Klebesiegels 26 in die Teilbereiche 28, 30 die beiden Gehäuseteile 16, 18 wieder so miteinander gekoppelt beziehungsweise verrastet werden, dass die Teilbereiche 28, 30 das Klebesiegel 26 in Richtung der Drehachse 14 einander genau gegenüberliegen.

Wenn hierbei jedoch das zweite Gehäuseteil 18 gegenüber dem ersten Gehäuseteil 16 um genau eine vollständige Umdrehung aus der Ausgangsstellung in die erste Richtung 22 (oder in die zweite Richtung 24) verdreht wurde, bevor die beiden Gehäuseteile 16, 18 wieder miteinander verrastet werden, so befindet sich das Flachbandkabel 20 nicht mehr in der gewünschten Mittelposition, welche mit der korrekten Ausrichtung der beiden Gehäuseteile 16, 18 relativ zueinander korrespondiert. Die korrekte Ausrichtung der beiden Gehäuseteile 16, 18 relativ zueinander ist diejenige Ausrichtung, welche die beiden Gehäuseteile 16, 18 in der Soll-Einbaulage des Lenksäulenmoduls 10 relativ zueinander aufweisen. Wird in einem solchen Fall, also nach dem versehentlichen Verdrehen des zweiten Gehäuseteils 18 um eine vollständige Umdrehung, die Trennung des Klebesiegels 26 nicht erkannt und das Lenksäulenmodul 10 in diesem Zustand an die Lenksäule des Kraftfahrzeugs montiert, so lässt sich das zweite Gehäuseteil 18 nicht mehr relativ zu dem ersten Gehäuseteil 16 um gleich große Winkelbeträge in die jeweiligen Richtungen 22, 24 drehen oder verdrehen.

Daher ist es wünschenswert, wenn ein gebrochenes Klebesiegel 26, also die Trennung des Klebesiegels 26 in die beiden Teilbereiche 28, 30, einfach und zuverlässig erkannt werden kann. Denn das gerissene Klebesiegel 26 deutet auf eine nicht vorgesehene Manipulation an dem Lenksäulenmodul 10 nach dessen Prüfung und Versiegelung, also nach dem Anbringen des Klebesiegels 26 an den beiden Gehäuseteilen 16, 18 hin.

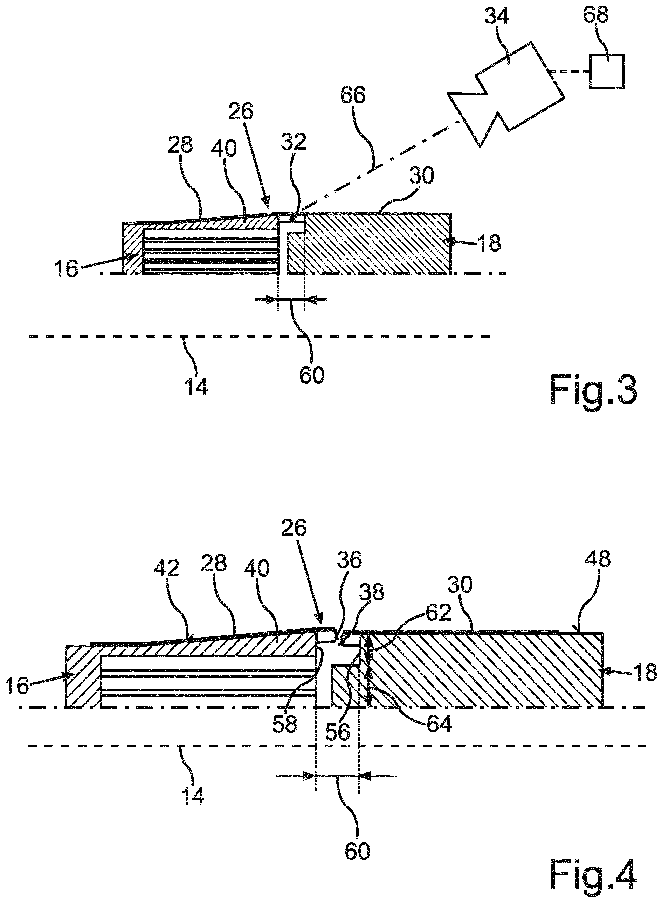

Es erweist sich jedoch als vergleichsweise schwierig, mittels einer Kamera 34 (vergleiche Fig. 3) eine Beschädigung des Klebesiegels 26 zu erfassen. Letzteres kann insbesondere dann der Fall sein, wenn Risslinien der beiden Hälften oder Teilbereiche 28, 30 des Klebesiegels 26 in radialer Richtung einander so nahe liegen, dass mittels der Kamera 34 das Vorliegen eines Risses beziehungsweise das Vorliegen der Trennung des Klebesiegels 26 nicht erkannt werden kann.

Vorliegend ist das Lenksäulenmodul 10 jedoch derart ausgebildet, dass eine verbesserte Erkennbarkeit eines gerissenen Foliensiegels oder Klebesiegels 26 erreicht wird beziehungsweise erreicht ist.

Hierfür ist vorgesehen, dass im Bereich eines möglichen Risses des Klebesiegels 26 ein mittels der Kamera 34 erkennbarer Kontrast besonders hoch ist. Um dies zu erreichen, ist durch die Ausgestaltung des Lenksäulenmoduls 10 dafür gesorgt, dass entlang der Risslinie, also vorliegend entlang der Perforationslinie 32, ein vergleichsweise großer radialer Abstand der Teilbereiche 28, 30 des Klebesiegels 26 voneinander vorliegt, wenn das Klebesiegel 26 gerissen ist.

Und weil bei dem vorliegend gezeigten Lenksäulenmodul 10 dafür gesorgt ist, dass bei einem Reißen des Klebesiegels 26 oder Foliensiegels die beiden Teilbereiche 28, 30 in radialer Richtung einen großen Abstand voneinander aufweisen, lässt sich eine Trennung des Klebesiegels 26 in die beiden Teilbereiche 28, 30 und somit eine mögliche Manipulation im Hinblick auf die Ausrichtung der beiden Gehäuseteile 16, 18 relativ zueinander mittels der Kamera 34 gut erkennen.

Die nachstehend erläuterten Maßnahmen zur Erhöhung der Erkennbarkeit des gerissenen Klebesiegels 26 beruhen auf der Erkenntnis, dass es schwierig ist, einen Riss in dem Klebesiegel 26 zu erkennen, wenn das Klebesiegel 26 in einer gemeinsamen Ebene über beide Gehäuseteile 16, 18 beziehungsweise Baugruppen des Lenksäulenmoduls 10 geklebt wird. Denn dann befinden sich bei einem gerissenen Klebesiegel 26 die beiden gegenüberliegenden Enden der Teilbereiche 28, 30 ebenfalls in der gleichen Ebene, ohne dass die Teilbereiche 28, 30 einen radialen Abstand voneinander haben.

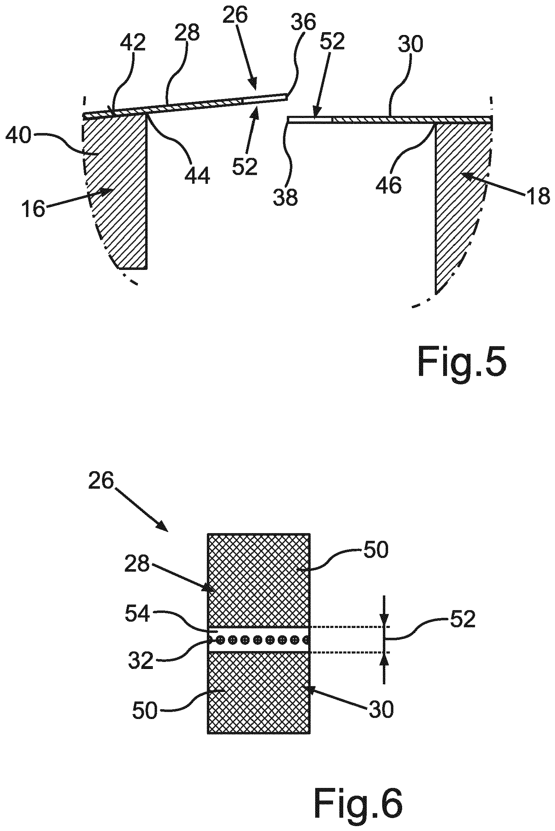

Vorliegend sind jedoch an wenigstens einem der beiden Gehäuseteile 16, 18 Mittel ausgebildet, welche bei einer Trennung des Klebesiegels 26 in die beiden Teilbereiche 28, 30 ein Überstehen eines freien Rands 36 eines der Teilbereiche 28, 30, vorliegend beispielsweise des Teilbereichs 28 (vergleiche Fig. 5), über einen freien Rand 38 des anderen Teilbereichs 30 bewirken.

In Fig. 5 ist dieses Überstehen des freien Rands 36 des ersten Teilbereichs 28, welcher vorliegend mit dem ersten Gehäuseteil 16 verklebt ist, über den freien Rand 38 des zweiten Teilbereichs 30, welcher vorliegend mit dem zweiten Gehäuseteil 18 verklebt ist, stark schematisiert und stark vergrößert dargestellt. Tatsächlich ist dieses Überstehen des freien Rands 36 über den freien Rand 38 vergleichsweise gering, wie dies deutlicher aus der ebenfalls schematischen Darstellung in Fig. 4 ersichtlich ist.

Die entsprechenden Mittel, welche dieses Überstehen des freien Rands 36 über den freien Rand 38 bei einer Trennung des Klebesiegels 26 in die beiden Teilbereiche 28, 30 bewirken, umfassen bei dem in Fig. 1 gezeigten Lenksäulenmodul 10 eine Mehrzahl von Maßnahmen. Zum einen ist an einem der beiden Gehäuseteile 16, 18, vorliegend an dem ersten Gehäuseteil 16, im Bereich des Klebesiegels 26 eine Rampe 40 ausgebildet (vergleiche Fig. 1 und Fig. 2).

Wie sich insbesondere aus einer Zusammenschau von Fig. 1 mit Fig. 4 ergibt, ist der erste Teilbereich 28 des Klebesiegels 26 mit einer Oberseite 42 der Rampe 40 in Anlage. Des Weiteren ist insbesondere aus Fig. 3 und aus Fig. 4 ersichtlich, dass die Oberseite 42 der Rampe 40 bezogen auf die Drehachse 14 geneigt ausgerichtet ist. Bei der vorliegend beispielhaft gezeigten Ausgestaltung ist die Rampe 40 hierbei bezogen auf die Drehachse 14 derart geneigt, dass ein freies Ende 44 der Rampe 40 (vergleiche Fig. 5) in radialer Richtung nach außen über einen Rand 46 des anderen Gehäuseteils 18 übersteht (vergleiche Fig. 5). Dementsprechend steht auch eine Außenseite des ersten Gehäuseteils 16 im Bereich des Klebesiegels 26 über eine Außenseite 48 des zweiten Gehäuseteils 18 in radialer Richtung über (vergleiche Fig. 4).

In einer (vorliegend nicht gezeigten) Variante des Lenksäulenmoduls 10 kann eine Neigung der Rampe 40 auch derart ausgebildet sein, dass das freie Ende 44 der Rampe 40 der Drehachse 14 näher ist als der Rand 46 des zweiten Gehäuseteils 18.

Durch das Vorsehen der Rampe 40 wird vorliegend dafür gesorgt, dass im Bereich der Perforationslinie 32 des Klebesiegels 26 ein radialer Höhenunterschied zwischen den beiden Gehäuseteilen 16, 18 besteht. Des Weiteren sorgt die Rampe 40 in vorteilhafter Weise dafür, dass der an der Oberseite 42 der Rampe 40 angebrachte erste Teilbereich 28 des Klebesiegels 26 einen Winkel weiterführt, welchen die Oberfläche oder Oberseite 42 der Rampe 40 und die Drehachse 14 einschließen , wenn das Klebesiegel 26 gerissen ist (vergleiche Fig. 4). Dementsprechend wird der Abstand der freien Ränder 36, 38 voneinander in der Höhe beziehungsweise der Abstand zwischen den beiden Teilbereichen 28, 30 in der radialen Richtung nochmals vergrößert. Dies liegt auch darin begründet, dass das vorliegend durch eine bereichsweise mit einem Klebstoff 50 beschichtete Folie 54 (vergleiche Fig. 6) gebildete Klebesiegel 26 oder Foliensiegel eine gewisse Eigensteifigkeit aufweist, welche zu einem solchen Aufrichten des Teilbereichs 28 führt.

Das Abheben des ersten Teilbereichs 28 des Klebesiegels 26 an dem freien Rand 36 des Teilbereichs 28 und somit das Überstehen des freien Rands 36 über den freien Rand 38 (vergleiche Fig. 5) des anderen Teilbereichs 30 wird vorzugsweise auch dadurch unterstützt, dass das Klebesiegel 26 im Bereich der Perforationslinie 32 nicht verklebt ist, also die Folie 54 nicht mit dem Klebstoff 50 beschichtet ist.

Dies ist aus der in Fig. 6 gezeigten Draufsicht auf eine Unterseite des Klebesiegels 26, also auf die den Gehäuseteilen 16, 18 zugewandte Seite des Klebesiegels 26, gut ersichtlich. Dementsprechend ist in einem jeweils an die Perforationslinie 32 angrenzenden Abschnitt 52 des jeweiligen Teilbereichs 28, 30 ein vorliegend durch die Folie 54 bereitgestellter Grundkörper des Klebesiegels 26 frei von dem Klebstoff 50. Die von dem Klebstoff 50 freien Abschnitte 52 des Klebesiegels 26 im Bereich der Perforationslinie 32 sind auch in Fig. 5 zu erkennen.

Insbesondere ist es vorteilhaft, wenn das Klebesiegel 26 in dem Bereich des an der Außenseite 48 geraden Gehäuseteils 18, also dort, wo das zweite Gehäuseteil 18 die zu der Drehachse 14 parallele Außenseite 48 aufweist (vergleiche Fig. 4), nicht verklebt oder mit dem Klebstoff 50 beschichtet ist. Wie aus Fig. 5 ersichtlich ist, kann jedoch auch der an den freien Rand 36 angrenzende Abschnitt 52 des ersten Teilbereichs 28 frei von dem Klebstoff 50 sein.

Die verbesserte Erkennbarkeit des gerissenen Foliensiegels oder Klebesiegels 26 wird vorliegend auch dadurch unterstützt, dass zwischen einem Stirnwandbereich 56 des zweiten Gehäuseteils 18 und einem diesem Stirnwandberiech 56 in Richtung der Drehachse 14 gegenüberliegenden Stirnwandbereich 58 des ersten Gehäuseteils 16 ein Spalt 60 ausgebildet ist (vergleiche Fig. 3 und Fig. 4). Dieser Spalt 60 ist in radialer Richtung vorliegend von dem Klebesiegel 26 überdeckt.

Wie aus einer Zusammenschau von Fig. 3 und Fig. 4 erkennbar ist, weist der Spalt 60 vorliegend einen ersten Spaltbereich 62 und einen zweiten Spaltbereich 64 auf. Der zweite Spaltbereich 64 ist der Drehachse 14 näher als der erste Spaltbereich 62. Des Weiteren ist der Spalt 60 in dem zweiten Spaltbereich 64 schmaler als in dem ersten Spaltbereich 62. Durch das Vorsehen des vergleichsweise großen Abstands der Stirnwandbereiche 56, 58 voneinander in dem ersten Spaltbereich 62 wird vorliegend das Auseinanderbewegen der Teilbereiche 28, 30 des gerissenen Klebesiegels 26 in die radiale Richtung unterstützt. Zudem sorgt dies für eine bessere Erkennbarkeit des gerissenen Foliensiegels oder Klebesiegels 26.

In Fig. 3 ist gezeigt, wie beim Überprüfen des Lenksäulenmoduls 10 auf eine Unversehrtheit des Klebesiegels 26 die Kamera 34 eingesetzt werden kann. Hierbei ist die Kamera 34 derart ausgerichtet, dass eine optische Achse 66 der Kamera 34 mit der Drehachse 14 einen spitzen Winkel einschließt. Dieser Winkel ist vorliegend in vorteilhafter Weise zu der gleichen Seite hin geöffnet wie ein Winkel, welchen die Oberseite 42 der Rampe 40 und die Drehachse 14 einschließen. Denn so kann die Kamera 34 die Trennung des Klebesiegels 26 besonders gut erfassen.

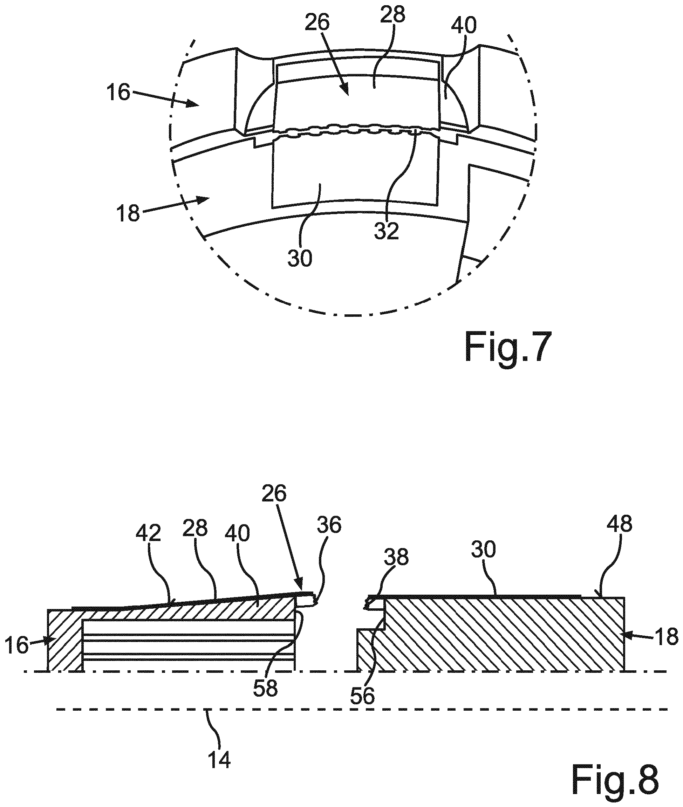

In Fig. 7 ist dementsprechend gezeigt, wie sich aus der Blickrichtung der Kamera 34 das an der Perforationslinie 32 gerissene Klebesiegel 26 darstellt. Folglich kann ein von der Kamera 34 aufgenommenes Bild, insbesondere mittels einer in Fig. 3 schematisch gezeigten Auswerteeinrichtung 68 sehr einfach darauf hin ausgewertet werden, ob das Klebesiegel 26 unversehrt ist oder, wie in Fig. 7 gezeigt, an der Perforationslinie 32 in die beiden Teilbereiche 28, 30 getrennt ist.

In Fig. 8 sind schematisch und ausschnittsweise die beiden Gehäuseteile 16, 18 in der Soll-Einbaulage des Lenksäulenmoduls 10 gezeigt. Dementsprechend sind die beiden Gehäuseteile 16, 18 in Richtung der Drehachse 14 weiter voneinander beabstandet als in dem Transportzustand oder Anlieferungszustand, welcher in Fig. 1 und in Fig. 4 dargestellt ist. Folglich ist auch in diesem Einbauzustand des Lenksäulenmoduls 10 das Klebesiegel 26 gerissen.

Insgesamt zeigen die Beispiele, wie sich für ein optisches Prüfsystem, welches die Kamera 34 nutzt, eine erhöhte Erkennbarkeit eines Risses in dem Klebesiegel 26 durch Vergrößerung eines radialen Abstands der freien Ränder 36, 38 der Teilbereiche 28, 30 des Klebesiegels 26 voneinander erreichen lässt. Dies gilt auch für den Fall, dass sich die beiden Gehäuseteile 16, 18 noch in dem Transportzustand beziehungsweise Anlieferungszustand befinden, in welchem die beiden Gehäuseteile 16, 18 drehfest miteinander verbunden beziehungsweise miteinander verrastet sind.

Denn der radiale Abstand zwischen den freien Rändern 36, 38 der Teilbereiche 28, 30 des Klebesiegels 26 (vergleiche Fig. 5) sorgt für eine gut erkennbare Konturänderung an der Risslinie beziehungsweise Perforationslinie 32. Der Riss in der Klebefolie beziehungsweise dem Klebesiegel 26 hebt sich besonders also sehr deutlich von dem Hintergrund des dahinter liegenden Gehäuseteils 16 ab (vergleiche Fig. 7).

Folglich lässt sich bei dem vorliegend gezeigten Lenksäulenmodul 10 eine kamerabasierte Prüfung auf eine Unversehrtheit des Klebesiegels 26 besonders einfach realisieren.

## Patentansprüche

1. Lenksäulenmodul (10) zum Anbringen an einer Lenksäule eines Kraftfahrzeugs, mit einem ersten Gehäuseteil (16) und mit einem zweiten Gehäuseteil (18), welches in einer Soll-Einbaulage des Lenksäulenmoduls (10), in welcher das Lenksäulenmodul an der Lenksäule angebracht ist, aus einer Ausgangsstellung gegenüber dem ersten Gehäuseteil (16) um wenigstens eine vollständige Umdrehung sowohl in eine erste Richtung (22) um eine Drehachse (14) des Lenksäulenmoduls (10) verdrehbar ist, als auch in eine zweite Richtung (24), welche der ersten Richtung (22) entgegengesetzt ist, mit einer elektrischen Leitung (20), welche mit beiden Gehäuseteilen (16, 18) gekoppelt und um die Drehachse (14) spiralförmig aufgewickelt in dem Lenksäulenmodul (10) aufgenommen ist,
**dadurch gekennzeichnet, dass**
das Lenksäulenmodul (10) ein Klebesiegel (26) zum Kenntlichmachen einer korrekten und mit der Soll-Einbaulage korrespondierenden Ausrichtung der beiden Gehäuseteile (16, 18) relativ zueinander aufweist, wobei ein erster Teilbereich (28) des Klebesiegels (26) mit dem ersten Gehäuseteil (16) verbunden ist und ein zweiter Teilbereich (30) des Klebesiegels (26) mit dem zweiten Gehäuseteil (18) verbunden ist, und wobei an wenigstens einem der beiden Gehäuseteile (16, 18) Mittel (40, 60) ausgebildet sind, welche bei einer Trennung des Klebesiegels (26) in die beiden Teilbereiche (28, 30) ein Überstehen eines freien Rands (36) eines der Teilbereiche (28) in radialer Richtung über einen freien Rand (38) des anderen Teilbereichs (30) bewirken.

2. Lenksäulenmodul (10) nach Anspruch 1,
**dadurch gekennzeichnet, dass**
die Mittel bereitgestellt sind, indem eine Außenseite eines der beiden Gehäuseteile (16) zumindest im Bereich eines der freien Ränder (36) des Klebesiegels (26) in radialer Richtung über eine Außenseite (48) des anderen der beiden Gehäuseteile (18) übersteht.

3. Lenksäulenmodul (10) nach Anspruch 1 oder 2,
**dadurch gekennzeichnet, dass**
die Mittel durch eine Rampe (40) bereitgestellt sind, welche an einem der beiden Gehäuseteile (16) zumindest im Bereich des Klebesiegels (26) ausgebildet ist, wobei einer der Teilbereiche (28) des Klebesiegels (26) mit einer bezogen auf die Drehachse (14) geneigt ausgerichteten Oberseite (42) der Rampe (40) in Anlage ist.

4. Lenksäulenmodul (10) nach Anspruch 3,
**dadurch gekennzeichnet, dass**
ein freies Ende (44) der Rampe (40) in radialer Richtung nach außen über einen Rand (46) des anderen der beiden Gehäuseteile (18) übersteht, oder ein freies Ende (44) der Rampe (40) der Drehachse (14) näher ist als ein Rand (46) des anderen der beiden Gehäuseteile (18).

5. Lenksäulenmodul (10) nach einem der Ansprüche 1 bis 4,
**dadurch gekennzeichnet, dass**
das Klebesiegel (26) eine Sollbruchlinie (32) aufweist, an welcher das Klebesiegel (26) in die beiden Teilbereiche (28, 30) trennbar ist, wobei ein an die Sollbruchlinie (32) angrenzender Abschnitt (52) wenigstens eines der Teilbereiche (28, 30) frei von einem Klebstoff (50) ist, mittels welchem der jeweilige Teilbereich (28, 30) des Klebesiegels (26) an dem korrespondierenden Gehäuseteil (16, 18) gehalten ist.

6. Lenksäulenmodul (10) nach einem der Ansprüche 1 bis 5,
**dadurch gekennzeichnet, dass**
die beiden Gehäuseteile (16, 18) in einem Transportzustand des Lenksäulenmoduls (10), in welchem ein Abstand der Gehäuseteile (16, 18) voneinander in Richtung der Drehachse (14) geringer ist als in der Soll-Einbaulage des, insbesondere eine Sensorvorrichtung (12) zum Erfassen eines Drehens einer Lenkwelle der Lenksäule um die Drehachse (14) umfassenden, Lenksäulenmoduls (10), drehfest miteinander gekoppelt, insbesondere drehfest miteinander verrastet, sind.

7. Lenksäulenmodul (10) nach Anspruch 6,
**dadurch gekennzeichnet, dass**
in dem Transportzustand zwischen einem Stirnwandbereich (56) eines der beiden Gehäuseteile (18) und einem in Richtung der Drehachse (14) diesem Stirnwandbereich (56) gegenüberliegenden Stirnwandbereich (58) des anderen der beiden Gehäuseteile (16) ein Spalt (60) ausgebildet ist, welcher in radialer Richtung zumindest bereichsweise von dem Klebesiegel (26) überdeckt ist.

8. Lenksäulenmodul (10) nach Anspruch 7,
**dadurch gekennzeichnet, dass**
der Spalt (60) einen ersten Spaltbereich (62) und einen zweiten Spaltbereich (64) umfasst, wobei der zweite Spaltbereich (64) der Drehachse (14) näher ist als der erste Spaltbereich (62), und wobei der Spalt (60) in dem zweiten Spaltbereich (64) schmaler ist als in dem ersten Spaltbereich (62).

9. Lenksäulenmodul (10) nach einem der Ansprüche 1 bis 8,
**dadurch gekennzeichnet, dass**
eine einem Betrachter zugewandte Oberfläche des Klebesiegels (26) eine Farbe und/oder eine Oberflächenstruktur und/oder eine Musterung aufweist, welche dem Klebesiegel (26) eine bessere optische Unterscheidbarkeit von wenigstens einem der Gehäuseteile (16, 18) verleiht als ohne das Vorsehen der Farbe und/oder der Oberflächenstruktur und/oder der Musterung.

10. Verfahren zum Überprüfen eines Lenksäulenmoduls (10) nach einem der Ansprüche 1 bis 9 auf eine Unversehrtheit des Klebesiegels (26), bei welchem festgestellt wird, ob das Klebesiegel (26) in die beiden Teilbereiche (28, 30) getrennt ist.

11. Verfahren nach Anspruch 10,
**dadurch gekennzeichnet, dass**
zum Feststellen, ob das Klebesiegel (26) in die beiden Teilbereiche (28, 30) getrennt ist, eine Kamera (34) verwendet wird, wobei für das Feststellen wenigstens ein von der Kamera (34) aufgenommenes Bild, insbesondere mittels einer Auswerteeinrichtung (68), ausgewertet wird.

12. Verfahren nach Anspruch 11,
**dadurch gekennzeichnet, dass**
die Kamera (34) derart ausgerichtet wird, dass eine optische Achse (66) der Kamera (34) mit der Drehachse (14) einen spitzen Winkel einschließt.

## Claims

1. Steering column module (10) for attachment to a steering column of a motor vehicle, having a first housing part (16) and having a second housing part (18) which, in a desired installation position of the steering column module (10), in which the steering column module is attached to the steering column, can be rotated around a rotation axis (14) of the steering column module (10) from a starting position in relation to the first housing part (16) by at least one complete revolution both in a first direction (22) and in a second direction (24) which is opposite to the first direction (22), having an electrical line (20) which is coupled to both housing parts (16, 18) and is received in the steering column module (10) in a manner wound spirally around the rotation axis (14),
**characterized in that**
the steering column module (10) has an adhesive seal (26) for identifying correct orientation, which corresponds to the desired installation position, of the two housing parts (16, 18) relative to one another, wherein a first subregion (28) of the adhesive seal (26) is connected to the first housing part (16) and a second subregion (30) of the adhesive seal (26) is connected to the second housing part (18), and wherein means (40, 60) are formed on at least one of the two housing parts (16, 18), which means cause a free edge (36) of one of the subregions (28) to protrude over a free edge (38) of the other subregion (30) in the radial direction when the adhesive seal (26) is separated into the two subregions (28, 30).

2. Steering column module (10) according to Claim 1, **characterized in that**
the means are provided by way of an outer side of one of the two housing parts (16) protruding over an outer side (48) of the other of the two housing parts (18) in the radial direction at least in the region of one of the free edges (36) of the adhesive seal (26).

3. Steering column module (10) according to Claim 1 or 2,
**characterized in that**
the means are provided by a ramp (40) which is formed on one of the two housing parts (16) at least in the region of the adhesive seal (26), wherein one of the subregions (28) of the adhesive seal (26) is in contact with a top side (42) of the ramp (40), which top side is oriented in a manner inclined with respect to the rotation axis (14) .

4. Steering column module (10) according to Claim 3, **characterized in that**
a free end (44) of the ramp (40) protrudes outward over an edge (46) of the other of the two housing parts (18) in the radial direction, or a free end (44) of the ramp (40) is closer to the rotation axis (14) than an edge (46) of the other of the two housing parts (18).

5. Steering column module (10) according to one of Claims 1 to 4,
**characterized in that**
the adhesive seal (26) has a predetermined breaking line (32) along which the adhesive seal (26) can be separated into the two subregions (28, 30), wherein a section (52), which adjoins the predetermined breaking line (32), of at least one of the subregions (28, 30) is free of an adhesive (50), by means of which the respective subregion (28, 30) of the adhesive seal (26) is held on the corresponding housing part (16, 18).

6. Steering column module (10) according to one of Claims 1 to 5,
**characterized in that**
the two housing parts (16, 18) are coupled to one another in a rotationally fixed manner, in particular latched to one another in a rotationally fixed manner, in a transportation state of the steering column module (10), in which a distance between the housing parts (16, 18) in the direction of the rotation axis (14) is smaller than in the desired installation position of the steering column module (10), in particular comprising a sensor device (12) for detecting rotation of a steering shaft of the steering column around the rotation axis (14).

7. Steering column module (10) according to Claim 6, **characterized in that**
a gap (60), which is covered by the adhesive seal (26) at least in regions in the radial direction, is formed between an end wall region (56) of one of the two housing parts (18) and an end wall region (58), which is situated opposite this end wall region (56) in the direction of the rotation axis (14), of the other of the two housing parts (16) in the transportation state.

8. Steering column module (10) according to Claim 7, **characterized in that**
the gap (60) comprises a first gap region (62) and a second gap region (64), wherein the second gap region (64) is closer to the rotation axis (14) than the first gap region (62), and wherein the gap (60) in the second gap region (64) is narrower than in the first gap region (62) .

9. Steering column module (10) according to one of Claims 1 to 8,
**characterized in that**
a surface of the adhesive seal (26), which surface faces an observer, has a colour and/or a surface structure and/or a pattern which provide/provides the adhesive seal (26) with better visual differentiation from at least one of the housing parts (16, 18) than without the provision of the colour and/or the surface structure and/or the pattern.

10. Method for checking a steering column module (10) according to one of Claims 1 to 9 for integrity of the adhesive seal (26), in which method it is determined whether the adhesive seal (26) is separated into the two subregions (28, 30).

11. Method according to Claim 10,
**characterized in that**
a camera (34) is used for determining whether the adhesive seal (26) is separated into the two subregions (28, 30), wherein at least one image recorded by the camera (34) is evaluated, in particular by means of an evaluation device (68), for the determination.

12. Method according to Claim 11,
**characterized in that**
the camera (34) is oriented in such a way that an optical axis (66) of the camera (34) encloses an acute angle with the rotation axis (14).

## Revendications

1. Module de colonne de direction (10) destiné à être disposé sur une colonne de direction d'un véhicule automobile, avec une première partie de boîtier (16) et avec une deuxième partie de boîtier (18) qui, dans une position de montage de consigne du module de colonne de direction (10) dans laquelle le module de colonne de direction est disposé sur la colonne de direction, peut être tournée à partir d'une position de départ par rapport à la première partie de boîtier (16) d'au moins une rotation complète aussi bien dans une première direction (22) autour d'un axe de rotation (14) du module de colonne de direction (10) que dans une deuxième direction (24) qui est opposée à la première direction (22), avec un câble électrique (20) qui est couplé aux deux parties de boîtier (16, 18) et qui est logé dans le module de colonne de direction (10) en étant enroulé en spirale autour de l'axe de rotation (14),
**caractérisé en ce que**
le module de colonne de direction (10) présente un sceau adhésif (26) pour identifier une orientation correcte et correspondant à la position de montage de consigne des deux parties de boîtier (16, 18) l'une par rapport à l'autre, une première zone partielle (28) du sceau adhésif (26) étant reliée à la première partie de boîtier (16) et une deuxième zone partielle (30) du sceau adhésif (26) étant reliée à la deuxième partie de boîtier (18), et des moyens (40, 60) étant réalisés sur au moins l'une des deux parties de boîtier (16, 18), lesquels, lors d'une séparation du sceau adhésif (26) en les deux zones partielles (28, 30), provoquent un dépassement d'un bord libre (36) de l'une des zones partielles (28) en direction radiale au-delà d'un bord libre (38) de l'autre zone partielle (30).

2. Module de colonne de direction (10) selon la revendication 1,
**caractérisé en ce que**
les moyens sont fournis par le fait qu'un côté extérieur de l'une des deux parties de boîtier (16) dépasse en direction radiale, au moins dans la zone de l'un des bords libres (36) du sceau adhésif (26), au-delà d'un côté extérieur (48) de l'autre des deux parties de boîtier (18).

3. Module de colonne de direction (10) selon la revendication 1 ou 2,
**caractérisé en ce que**
les moyens sont fournis par une rampe (40) qui est réalisée sur l'une des deux parties de boîtier (16) au moins dans la zone du sceau adhésif (26), l'une des zones partielles (28) du sceau adhésif (26) étant en appui contre un côté supérieur (42) de la rampe (40) orienté de manière inclinée par rapport à l'axe de rotation (14).

4. Module de colonne de direction (10) selon la revendication 3,
**caractérisé en ce**
**qu'**une extrémité libre (44) de la rampe (40) dépasse en direction radiale vers l'extérieur au-delà d'un bord (46) de l'autre des deux parties de boîtier (18), ou une extrémité libre (44) de la rampe (40) est plus proche de l'axe de rotation (14) qu'un bord (46) de l'autre des deux parties de boîtier (18).

5. Module de colonne de direction (10) selon l'une quelconque des revendications 1 à 4,
**caractérisé en ce que**
le sceau adhésif (26) présente une ligne de rupture (32) au niveau de laquelle le sceau adhésif (26) peut être séparé en les deux zones partielles (28, 30), une section (52) adjacente à la ligne de rupture (32) d'au moins l'une des zones partielles (28, 30) étant exempte d'un adhésif (50) au moyen duquel la zone partielle respective (28, 30) du sceau adhésif (26) est maintenue sur la partie de boîtier correspondante (16, 18).

6. Module de colonne de direction (10) selon l'une quelconque des revendications 1 à 5,
**caractérisé en ce que**
les deux parties de boîtier (16, 18) sont couplées l'une à l'autre de manière solidaire en rotation, notamment encliquetées l'une avec l'autre de manière solidaire en rotation, dans un état de transport du module de colonne de direction (10) dans lequel une distance des parties de boîtier (16, 18) l'une par rapport à l'autre en direction de l'axe de rotation (14) est inférieure à la position de montage de consigne du module de colonne de direction (10), comprenant notamment un dispositif de détection (12) pour détecter une rotation d'un arbre de direction de la colonne de direction autour de l'axe de rotation (14).

7. Module de colonne de direction (10) selon la revendication 6,
**caractérisé en ce que**
dans l'état de transport, entre une zone de paroi frontale (56) de l'une des deux parties de boîtier (18) et une zone de paroi frontale (58) de l'autre des deux parties de boîtier (16), opposée à cette zone de paroi frontale (56) en direction de l'axe de rotation (14), est réalisé un interstice (60) qui est recouvert en direction radiale au moins par zones par le sceau adhésif (26).

8. Module de colonne de direction (10) selon la revendication 7,
**caractérisé en ce que**
l'interstice (60) comprend une première zone d'interstice (62) et une deuxième zone d'interstice (64), la deuxième zone d'interstice (64) étant plus proche de l'axe de rotation (14) que la première zone d'interstice (62), et l'interstice (60) étant plus étroit dans la deuxième zone d'interstice (64) que dans la première zone d'interstice (62) .

9. Module de colonne de direction (10) selon l'une quelconque des revendications 1 à 8,
**caractérisé en ce**
**qu'**une surface du sceau adhésif (26) orientée vers un observateur présente une couleur et/ou une structure de surface et/ou un motif qui confère au sceau adhésif (26) une meilleure distinction optique d'au moins l'une des parties de boîtier (16, 18) que si la couleur et/ou la structure de surface et/ou le motif n'étaient pas prévus.

10. Procédé de contrôle de l'intégrité du sceau adhésif (26) d'un module de colonne de direction (10) selon l'une quelconque des revendications 1 à 9, dans lequel on détermine si le sceau adhésif (26) est séparé en les deux zones partielles (28, 30).

11. Procédé selon la revendication 10,
**caractérisé en ce que**
pour déterminer si le sceau adhésif (26) est séparé en les deux zones partielles (28, 30), on utilise une caméra (34), au moins une image prise par la caméra (34) étant évaluée pour la détermination, notamment au moyen d'un dispositif d'évaluation (68).

12. Procédé selon la revendication 11,
**caractérisé en ce que**
la caméra (34) est orientée de telle sorte qu'un axe optique (66) de la caméra (34) forme un angle aigu avec l'axe de rotation (14).
